# FASCICULE DE BREVET EUROPEEN

(11) **EP 3 033 818 B1**
(45) Date de publication et mention de la délivrance du brevet: **02.12.2020**
(21) Numéro de dépôt: 14758593.9
(22) Date de dépôt: 04.08.2014
(51) Int. Cl.: H02J 7/02, H02J 7/00

(54) **APPAREIL AUTONOME ET SYSTÈME COMPORTANT UN TEL APPAREIL**
AUTONOME VORRICHTUNG UND SYSTEM MIT SOLCH EINER VORRICHTUNG
AUTONOMOUS APPARATUS AND SYSTEM COMPRISING SUCH AN APPARATUS

(30) Priorité: 12.08.2013 FR 1301920
(43) Date de publication de la demande: 22.06.2016
(73) Titulaire: Phlox, 13100 Aix-en-Provence (FR)
(72) Inventeur: BLANC, Christophe, F-84160 Lourmarin (FR)
(74) Mandataire: Marchand, André
(86) Numéro de dépôt international: PCT/FR2014/000181
(87) Numéro de publication internationale: WO 2015/022453

(56) Documents cités:
- WO-A2-2006/038795
- US-A1- 2008 290 738
- US-A1- 2013 175 937

## Description

### DOMAINE TECHNIQUE

La présente invention est relative à un appareil autonome alimenté par induction, et à un système comportant un dispositif d'alimentation par induction d'un tel appareil.

La présente invention s'applique notamment à un appareil autonome d'éclairage à diodes luminescentes (LEDs) alimenté par induction, et à un système d'éclairage comportant un dispositif d'alimentation par induction d'un tel appareil.

### ETAT DE LA TECHNIQUE

La demande internationale WO2011/083258 décrit un appareil d'éclairage à diodes électroluminescentes (LEDs) alimenté par induction.

L'appareil d'éclairage comporte un guide de lumière éclairé par ses deux tranches opposées, par des LEDs respectivement disposées en regard de ces deux tranches.

Les LEDs sont raccordées en parallèle aux bornes d'une inductance et disposées à l'intérieur d'un boîtier comportant des parois opaques délimitant une ouverture en regard de laquelle s'étend le guide de lumière.

L'appareil d'éclairage est conçu pour être alimenté par un module d'alimentation qui comporte une inductance connectée aux bornes d'un générateur de courant alternatif.

La face « avant » du guide est munie d'éléments diffusants, et un réflecteur est prévu sur - ou accolé contre - la face « arrière » du guide.

Les éléments diffusants sont constitués de saillies ou de dépressions allongées, formées ou disposées sur la face avant du guide, et peuvent être constitués de rainures formées à l'aide d'un faisceau laser, dont l'espacement mutuel varie le long d'au moins un axe.

La lumière émise par les LEDs subit des réflexions multiples à l'intérieur du guide. Les éléments diffusants provoquent une diffusion de la lumière émise par les LEDs et se propageant dans le guide, vers chacune des deux faces principales opposées du guide.

L'appareil d'éclairage comporte une capacité et un redresseur raccordés en série avec l'inductance. La capacité forme, avec l'inductance, un circuit oscillant accordé sur la fréquence du générateur.

Le redresseur est constitué par un pont de diodes qui alimente des groupes de LEDs raccordés en parallèle, chaque groupe de LEDs comportant plusieurs LEDs raccordées en série.

L'appareil d'éclairage comporte des interrupteurs respectivement raccordés en série avec les groupes de LEDs, dont l'ouverture et la fermeture sont commandées par une unité de commande à micro contrôleur programmée pour assurer un éclairement avec l'intensité et/ou la colorimétrie souhaitée.

Des modules de commande de type à modulation de largeur d'impulsion (« PWM ») peut être intégrés à l'unité de commande ou interposés entre cette unité et les interrupteurs, pour contrôler l'alimentation des LEDs.

L'unité de commande est alimentée par un module d'alimentation raccordé aux sorties du redresseur, et est reliée à un transmetteur de signaux et/ou de données, par une liaison bidirectionnelle, ainsi qu'à un capteur de mouvement.

Le transmetteur permet à l'unité de commande de recevoir des données de commande transmises à l'appareil d'éclairage par un appareil de télécommande de l'appareil d'éclairage.

Le capteur de mouvement peut comporter un (ou des) accéléromètre(s) solidaire(s) du boîtier de l'appareil d'éclairage.

Le capteur de mouvement permet à l'unité de commande de détecter des mouvements de l'appareil d'éclairage et de modifier en conséquence les signaux délivrés par l'unité de commande aux interrupteurs, en particulier pour faire varier le flux lumineux émis par les LEDs en fonction des signaux délivrés par le capteur.

L'inductance - servant d'induit - de l'appareil d'éclairage et l'inductance - servant d'inducteur - du module d'alimentation sont formées par un conducteur présentant une forme de spirale.

Le module d'alimentation (générateur) comporte un convertisseur produisant un courant alternatif à une fréquence correspondant à celle du circuit résonant de l'appareil d'éclairage à alimenter.

Le convertisseur comporte un pont en « H » comportant une branche centrale constituée de l'inducteur raccordé en série avec une capacité, et quatre interrupteurs à transistor de type MOSFET commandés par une unité de commande à microcontrôleur.

Le microcontrôleur reçoit des signaux délivrés par un convertisseur raccordé à un capteur de courant sensible au courant traversant l'inductance du pont en « H ».

Le capteur de courant est utilisé pour détecter les variations du courant traversant l'inductance du pont et pour en déduire la présence - ou l'absence - d'un induit dans le champ magnétique produit par l'inductance du générateur, afin de détecter la présence d'un appareil d'éclairage à alimenter par induction.

Le microcontrôleur du générateur est également relié à un transmetteur radio pour envoyer des données de commande à l'appareil d'éclairage.

La demande US2013/175937 décrit un autre appareil d'éclairage à LEDs alimenté par induction, et un système d'alimentation par induction de cet appareil.

### EXPOSÉ DE L'INVENTION

Un objectif de l'invention est de proposer un appareil autonome alimenté par induction, en particulier un appareil d'éclairage autonome alimenté par induction, qui soit amélioré et/ou qui remédie, en partie au moins, aux lacunes ou inconvénients des appareils autonomes connus.

Un objectif de l'invention est de proposer un appareil d'éclairage autonome, c.à.d. qui puisse alimenter les LEDs pendant une durée significative, pendant que l'appareil d'éclairage est disposé à distance d'un générateur à induction.

Un objectif de l'invention est de proposer un appareil alimenté par induction et autonome, qui soit simple, compact, et performant.

Selon un aspect de l'invention, il est proposé un appareil comportant une inductance, un redresseur couplé à l'inductance, et une charge couplée (indirectement) au redresseur, l'appareil comporte également un convertisseur de tension couplé au redresseur, et une batterie couplée au convertisseur de tension ; la charge est couplée au convertisseur de tension, et l'appareil autonome comporte en outre une unité de commande couplée au convertisseur de tension et agencée pour commander soit la charge la batterie par le redresseur, soit l'alimentation de la charge par le redresseur, soit l'alimentation de la charge par la batterie, en fonction de l'état d'un organe de commande de l'alimentation de la charge et de la tension de sortie du redresseur.

Selon un mode de réalisation, la charge comporte - ou est essentiellement constituée par - des LEDs raccordées en série.

Selon d'autres modes de réalisation, la charge peut comporter un moteur à courant continu, une tablette ou un ordinateur, un capteur, ou un instrument de mesure.

Selon un mode de réalisation de l'invention, il est proposé un appareil d'éclairage comportant une inductance, un redresseur raccordé (ou autrement couplé) à l'inductance, un circuit d'alimentation des LEDs qui est raccordé/couplé au redresseur et qui comporte des interrupteurs commandés par une unité de commande programmable; l'unité de commande est programmée pour ajuster/contrôler le courant d'alimentation des LEDs par l'inductance et le redresseur; l'appareil d'éclairage comporte en outre une batterie raccordée/couplée au circuit d'alimentation des LEDs, et l'unité de commande est également programmée pour, selon la charge de la batterie et la présence d'un générateur à induction, ajuster/contrôler le courant de charge de la batterie par l'inductance et le redresseur, ou ajuster/contrôler le courant d'alimentation des LEDs par la batterie.

En d'autres termes et selon un autre aspect de l'invention, il est proposé un appareil alimenté par induction et comportant une batterie, dans lequel un circuit convertisseur alimenté par un redresseur connecté à une inductance, est utilisé et commandé soit pour charger la batterie, soit pour alimenter la charge par le redresseur, soit pour alimenter la charge par la batterie.

Le circuit convertisseur convertit une tension d'entrée sensiblement continue en une tension de sortie sensiblement continue.

Le circuit convertisseur de tension peut comporter un circuit en demi pont comportant deux commutateurs tels que des transistors, en particulier des transistors de type MOSFET, dont l'ouverture et la fermeture sont commandées par un circuit de pilotage des commutateurs, en fonction de signaux de commande délivrés au circuit de pilotage par l'unité de commande de l'appareil d'éclairage.

Selon un mode de réalisation, le circuit convertisseur de tension est agencé et commandé pour charger la batterie en « abaissant » la tension de sortie du redresseur, c.à.d. sous une tension de charge inférieure à la tension de sortie du redresseur, généralement avec un courant de charge dont l'intensité est sensiblement constante.

Par ailleurs, le circuit convertisseur de tension peut être agencé et commandé pour alimenter la charge, en particulier les LEDs, à partir de la batterie en « élevant » la tension de sortie de la batterie, c.à.d. sous une tension d'alimentation supérieure à la tension de sortie de la batterie, en particulier avec un courant d'alimentation dont l'intensité est sensiblement constante, ou sous une tension d'alimentation sensiblement constante.

Selon un autre aspect de l'invention, il est proposé un appareil d'éclairage à LEDs alimenté par induction et comportant une inductance, un redresseur couplé à l'inductance, un convertisseur de tension couplé au redresseur, une batterie couplée au convertisseur de tension, des LEDs couplées également au convertisseur de tension, une unité de commande programmable couplée au convertisseur de tension et agencée pour commander soit la charge la batterie par le redresseur, soit l'alimentation des LEDs par le redresseur, soit l'alimentation des LEDs par la batterie.

L'appareil comporte de préférence en outre un circuit d'amorçage couplé au redresseur et à l'unité de commande programmable et comportant une capacité suffisante pour alimenter (temporairement) l'unité de commande en l'absence de délivrance d'une tension continue par le redresseur et par la batterie.

Ceci permet d'amorcer le fonctionnement de l'appareil à l'aide d'impulsions espacées, de faible puissance moyenne, qui sont émises par un dispositif d'alimentation par induction en regard duquel (par exemple sur lequel) est placé l'appareil.

Selon un autre aspect de l'invention, il est proposé un système d'alimentation par induction d'un appareil autonome selon l'invention, qui comporte un dispositif d'alimentation de l'appareil autonome par induction qui comporte :
- un second convertisseur de tension continue,
- une (seconde) inductance couplée au second convertisseur de tension, et
- une (seconde) unité de commande couplée au second convertisseur de tension et agencée pour commander soit l'alimentation de l'inductance par le second convertisseur sous une tension contrôlée, en fonction de données de tension enregistrées dans une mémoire associée à l'unité de commande, soit la délivrance à l'inductance, par le second convertisseur, d'impulsions espacées dans le temps, en fonction de la tension mesurée aux bornes de la seconde inductance.

L'invention permet notamment de commander de façon indépendante, l'appareil autonome d'une part, le dispositif d'alimentation par induction d'autre part, sans nécessiter d'échange de signaux ou données entre cet appareil et ce dispositif, tout en assurant la stabilité de leurs fonctionnements respectifs.

L'invention s'applique avantageusement à un appareil d'éclairage présentant des caractéristiques décrites dans la demande internationale WO2011/083258 dont le contenu est incorporé à la présente (par référence).

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est un schéma illustrant les principaux composants - et leurs interconnexions - d'un appareil d'éclairage selon un mode de réalisation.
La figure 2 est un schéma illustrant les principaux composants - et leurs interconnexions - d'un dispositif d'alimentation par induction d'un appareil d'éclairage tel que celui illustré figure 1.

### DESCRIPTION DETAILLEE DE L'INVENTION

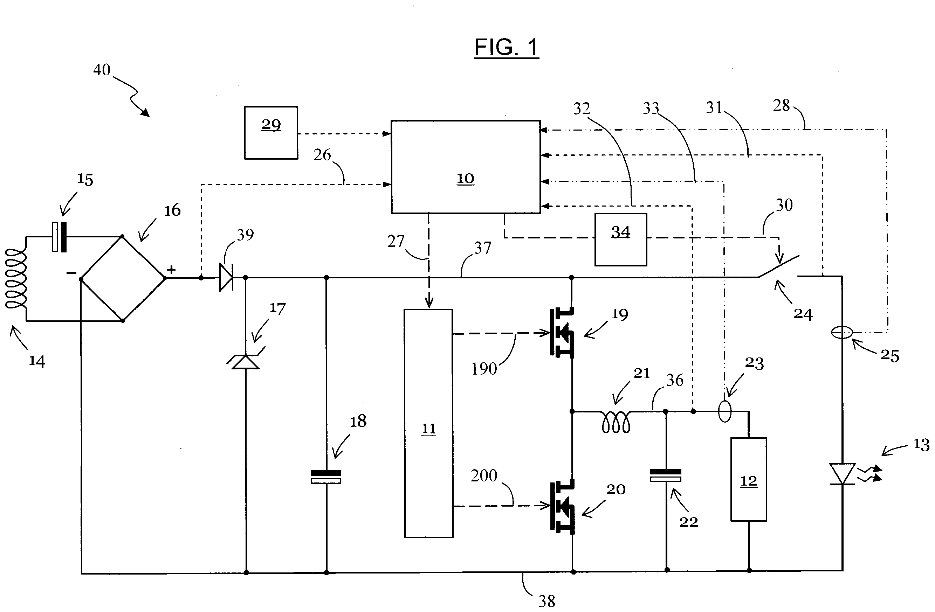

Par référence à la figure 1, l'appareil d'éclairage 40 comporte au moins un groupe de LEDs 13 raccordées en série, et une inductance 14 permettant l'alimentation de l'appareil 40 par induction.

L'appareil 40 comporte en outre une batterie 12 capable d'emmagasiner l'énergie électrique permettant d'alimenter les LEDs pendant une durée significative qui est de préférence de l'ordre d'une ou plusieurs heure(s).

Une capacité 15 raccordée en série avec l'inductance 14 permet d'accorder l'inductance sur la fréquence d'alimentation par induction qui peut être de l'ordre de 10 kilohertz (kHz) à 20 kHz ou 40 kHz, par exemple.

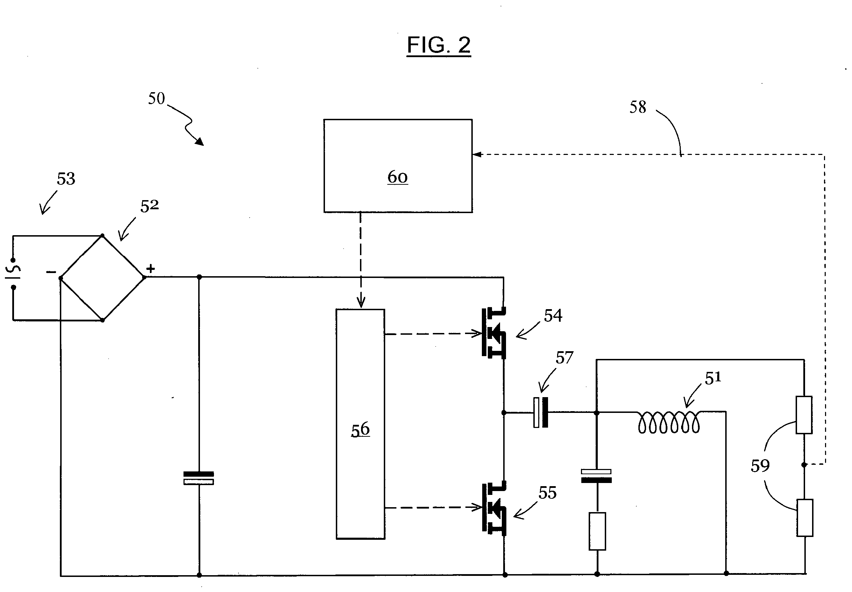

Un pont 16 redresseur à diodes est connecté au circuit 14, 15 d'entrée formé par l'inductance 14 et la capacité 15, pour redresser la tension délivrée par ce circuit lorsque l'inductance 14 est placée dans le champ électromagnétique produit par l'inducteur d'un dispositif d'alimentation par induction tel que celui illustré figure 2.

Le fonctionnement de l'appareil 40 est commandé par une unité 10 de commande à microprocesseur ou microcontrôleur faisant partie de l'appareil, en fonction notamment de signaux délivrés par un organe 29 de commande relié à l'unité 10.

Cet organe 29 de commande servant d'interrupteur d'alimentation de la charge 13, peut être un accéléromètre inclus dans l'appareil et sensible aux mouvements de l'appareil, de sorte que l'utilisateur de l'appareil peut commander son fonctionnement en imprimant à l'appareil des mouvements qui sont détectés par le capteur 29.

Alternativement, cet organe 29 peut comporter un capteur sensible au contact d'un objet avec l'appareil, en particulier un capteur de pression sensible au contact ou à l'appui d'un doigt d'un utilisateur sur l'appareil.

La tension de sortie du pont redresseur est mesurée par l'unité 10 de commande, par l'intermédiaire d'une liaison 26 reliant la borne positive du redresseur à l'unité 10.

Une diode 39 raccordée à la borne positive du pont redresseur, sert à isoler la tension de sortie du pont redresseur, de la tension aux bornes de la batterie 12, de façon à permettre à l'unité 10 de commande, de détecter l'alimentation par induction de l'appareil 40.

Une diode 17 raccordée entre la diode 39 et la borne négative du redresseur 16, sert à protéger les composants de l'appareil situés en aval de la diode 17, contre des pics de tension en sortie du redresseur.

Une capacité 18 raccordée en parallèle de la diode 17, sert à stoker de l'énergie électrique délivrée par le circuit 14 à 16, et à transmettre cette énergie aux composants de commande de l'appareil, en particulier à l'unité 10 de commande, pour les alimenter pendant une phase d'amorçage du fonctionnement de l'appareil 40, lorsque la batterie 12 de l'appareil 40 est déchargée et que le dispositif d'alimentation par induction est en mode de veille, et ne transmet pas l'énergie nécessaire à l'alimentation des LEDs et/ou à la charge de la batterie.

L'appareil 40 comporte un circuit convertisseur de tension raccordé en parallèle de la capacité 18 et de la diode 17, qui sert à transformer la tension sensiblement continue de sortie du redresseur 16, en une tension sensiblement continue de valeur inférieure à la précédente, pour occasionner la charge de la batterie 12.

Ce circuit convertisseur comporte un circuit en demi-pont comportant deux transistors MOSFET 19, 20 servant de commutateurs et un circuit 11 relié aux transistors 19, 20 par des liaisons 190, 200, et servant à commander l'ouverture et la fermeture des transistors 19, 20, en fonction de signaux de commande délivrés au circuit 11 par l'unité 10 de commande, lorsque cette unité 10 commande la charge de la batterie 12.

Le convertisseur de tension comporte ainsi une branche raccordée à la sortie du redresseur et comportant les deux transistors 19, 20 raccordés en série.

Le convertisseur de tension comporte également une inductance 21 et une capacité 22 raccordées en série au point milieu de la branche des transistors 19, 20, entre ce point milieu et une équipotentielle 38 reliée à la borne négative du redresseur.

On observe figure 1 que la batterie 12 est raccordée aux bornes de la capacité 22, c.à.d. à l'équipotentielle 38 et à l'équipotentielle 36 reliant la capacité 22 à l'inductance 21.

On observe également que les LEDs 13 sont montées en série avec un interrupteur 24 qui est commandé par l'unité 10, par l'intermédiaire d'un circuit 34 de pilotage et d'une liaison 30.

Cet interrupteur 24 peut être un transistor de type MOSFET également.

La branche comportant l'interrupteur 24 et les LEDs est raccordée entre l'équipotentielle 37 reliée à la borne positive du redresseur, et l'équipotentielle 38.

Pour la charge de la batterie 12 à partir de la tension délivrée par le redresseur 16, l'interrupteur 24 est ouvert et le convertisseur de tension constitué des transistors 19, 20 et des composants 21, 22, délivre aux bornes de la batterie une tension de charge qui est inférieure à celle délivrée par le redresseur.

Dans ce mode de fonctionnement, les transistors 19, 20 sont commandés de façon asynchrone par le circuit 11 : seul le transistor 19 est commuté, le transistor 20 étant maintenu bloqué.

Dans ce mode, par ailleurs, l'unité 10 de commande contrôle la tension et le courant de charge de la batterie 12, respectivement par l'intermédiaire d'une liaison 32 de mesure de tension de charge, et d'une liaison 33 connectée à un capteur 23 d'intensité de charge, qui sont prévus dans l'équipotentielle reliant la batterie 12 à l'inductance 21.

Ainsi, la charge peut être déclenchée lorsque la tension mesurée par l'intermédiaire de la liaison 32 devient inférieure à une première tension UC1 déterminée, et la charge peut être stoppée lorsque la tension mesurée atteint une seconde tension UC2 déterminée, de valeur supérieure à UC1.

Pendant la charge, l'intensité du courant mesurée par le capteur 23 peut être maintenue sensiblement constante, voisine d'une (ou égale à une) première intensité IC1 déterminée, en agissant sur la commande du transistor 19 par le circuit 11.

Alternativement, l'intensité de ce courant peut avantageusement être maintenue sensiblement constante en agissant sur la tension aux bornes de l'inducteur du dispositif d'alimentation de l'appareil 40, comme précisé ci après.

Les valeurs des tensions UC1, UC2 et de l'intensité IC1 sont adaptées à la batterie 12 utilisée qui peut être par exemple un accumulateur électrochimique lithium-ion.

Pour l'alimentation « directe » des LEDs par le courant induit dans l'inductance 14 et redressé par le redresseur 16, l'interrupteur 24 est commandé par l'unité 10 et le circuit 34 afin de délivrer aux LEDs un courant d'alimentation adapté aux LEDs.

Pendant l'alimentation des LEDs, l'unité 10 de commande peut contrôler la tension et le courant d'alimentation, respectivement par l'intermédiaire d'une liaison 31 de mesure de tension d'alimentation, et d'une liaison 28 connectée à un capteur 25 d'intensité, qui sont prévus dans la branche contenant les LEDs et le commutateur 24.

Dans ce mode de fonctionnement, l'intensité du courant d'alimentation des LEDs mesurée par le capteur 25 peut avantageusement être maintenue sensiblement constante, voisine d'une (ou égale à une) seconde intensité IC2 déterminée, en agissant sur la tension aux bornes de l'inducteur du dispositif d'alimentation de l'appareil 40, comme précisé ci après.

Pour l'alimentation des LEDs 13 à partir de la tension délivrée par la batterie 12, l'interrupteur 24 est fermé et le convertisseur de tension constitué des transistors 19, 20 et des composants 21, 22, délivre aux bornes du groupe de LEDs en série, une tension d'alimentation qui est supérieure à celle délivrée par la batterie.

Dans ce mode de fonctionnement, les transistors 19, 20 sont commandés de façon synchrone par le circuit 11, pour s'ouvrir et se fermer en alternance (en opposition de phase).

Lorsque l'alimentation des LEDs est demandée par l'utilisateur par l'intermédiaire de l'organe 29, le passage d'un mode d'alimentation des LEDs par la batterie 12 à un mode d'alimentation par le redresseur, est commandé par l'unité 10 de commande en fonction d'une mesure de la tension en sortie du redresseur 16, qui indique si l'appareil 40 est disposé en regard d'un dispositif adapté d'alimentation par induction.

Lorsque cette condition est remplie, l'unité 10 commande l'alimentation des LEDs par le redresseur et le commutateur 24 piloté par le circuit 34.

Si cette condition n'est pas remplie, l'unité 10 commande l'alimentation des LEDs par la batterie 12 et le convertisseur 19 à 22, tant que la tension de la batterie est au moins égale à la tension UC1 déterminée. Pendant cette phase, l'unité 10 peut mesurer la tension aux bornes de la batterie et peut commander le circuit 11 afin d'augmenter le courant de décharge de la batterie et compenser la baisse de cette tension.

Lorsque la tension de la batterie devient inférieure à la tension UC1, l'unité 10 commande l'arrêt de l'alimentation des LEDs par la batterie.

Par référence à la figure 2, le dispositif 50 d'alimentation comporte un inducteur 51 servant à créer un champ magnétique adapté à l'induit (repère 14 figure 1) de l'appareil d'éclairage à alimenter par induction.

Le dispositif 50 comporte un pont 52 redresseur servant à redresser une tension alternative délivrée par une source 53, et un circuit convertisseur de tension 54, 55, 57 similaire à celui décrit précédemment.

Ce circuit convertisseur comporte une branche à deux transistors 54, 55 raccordés en série aux bornes du redresseur 52.

L'inductance 51 est raccordée au point milieu du demi-pont 54, 55, par l'intermédiaire d'une capacité 57, ainsi qu'à la borne négative du redresseur 52.

Le fonctionnement des transistors 54, 55 est piloté par un circuit 56 contrôlé par une unité 60 de commande à microcontrôleur.

L'unité de commande 60 mesure la tension aux bornes de l'inducteur 51, par l'intermédiaire d'une liaison 58 reliant l'unité 60 au point milieu d'un pont diviseur à résistances 59.

La mesure de cette tension permet à l'unité 60 d'adapter la commande des transistors 54, 55 en fonction des « besoins » d'un appareil 40 d'éclairage dont l'induit 14 est placé dans le champ de l'inducteur 51, de façon plus précise et plus fiable que par une mesure du courant traversant l'inducteur 51.

En effet, la mesure de cette tension correspond à une image de la puissance absorbée par l'appareil 40 dont l'inductance 14 est placée dans le champ généré par l'inducteur 51.

Par exemple, lorsque la batterie 12 de l'appareil 40 est en charge, la tension aux bornes de la batterie augmente au fur et à mesure de la charge, ce qui provoque une augmentation de la puissance absorbée par l'appareil 40.

Il en résulte une augmentation de la puissance traversant l'inducteur 51 et de la tension aux bornes de cet inducteur. Cette tension - et la puissance délivrée à l'inducteur - peut alors être régulée par l'unité 60, en fonction de données enregistrées dans une mémoire associée à l'unité 60, qui sont déterminées à partir des caractéristiques de charge de la batterie 12, afin de maintenir un courant de charge de la batterie sensiblement constant.

Ainsi, la charge de la batterie 12 est avantageusement exclusivement gérée par le dispositif 50 d'alimentation par induction qui est agencé pour délivrer à l'appareil 40 un courant (de charge de la batterie) d'intensité constante, et donc pour délivrer une puissance qui augmente avec l'augmentation de la tension de la batterie.

Lorsque l'inductance d'un appareil d'éclairage est placée en regard et à proximité de l'inducteur 51, et que l'unité de commande de cet appareil commande la charge de la batterie de l'appareil ou l'alimentation de LEDs, puis que la charge de la batterie (respectivement l'alimentation des LEDs) est stoppée ou bien que l'appareil est éloigné du dispositif 50, la tension aux bornes de l'inducteur 51 augmente.

Lorsque cette augmentation est détectée par l'unité 60 de commande, cette unité commande l'arrêt du convertisseur de tension alimentant l'inducteur, pour passer dans un mode de « veille », dans lequel l'unité 10 et le circuit 56 commandent la production d'impulsions espacées dans le temps, avec un rapport cyclique faible, par exemple en produisant toutes les secondes un train d'impulsions d'une durée de quelques millisecondes.

Lorsque l'inductance d'un appareil d'éclairage 40 dont la batterie est déchargée (ou dont les LEDs doivent être alimentées), est à nouveau placée en regard et à proximité de l'inducteur 51, ces impulsions sont suffisantes pour charger la capacité d'amorçage 18 incluse dans l'appareil 40.

Lorsque l'énergie emmagasinée dans la capacité d'amorçage est suffisante pour alimenter l'unité 10, celle-ci commande la charge de la batterie 12 par le circuit 11, ce qui provoque une élévation de la tension dans l'inducteur 51, qui est détectée par l'unité 60 qui commande à son tour le démarrage de l'alimentation par induction.

En l'absence de besoin d'alimentation du chargeur de batterie 12 et des LEDs 13, la tension aux bornes de l'inducteur dépasse alors une valeur déterminée, ce qui est détecté par l'unité 60 qui stoppe alors l'alimentation de l'inducteur pour revenir en mode de veille.

Bien que la description détaillée ci-dessus vise l'application de l'invention à un appareil d'éclairage, on comprend que l'invention peut avantageusement s'appliquer à un appareil autonome alimenté par induction, dont la charge peut être un moteur ou un capteur par exemple.

L'invention a pour résultat un appareil autonome alimenté par induction dont la structure est simple et le fonctionnement stable.

L'invention a également pour résultat un système d'alimentation par induction d'un appareil autonome, en particulier d'un appareil d'éclairage autonome, qui ne nécessite pas de transfert de données de fonctionnement, entre l'appareil et le dispositif qui l'alimente.

En effet, comme décrit ci avant et selon un aspect de l'invention, l'alimentation de la batterie et des LEDs de l'appareil d'éclairage est gérée exclusivement par le dispositif 50 d'alimentation par induction. Les circuits de l'appareil 40 n'interviennent que pour alimenter les LEDs à partir de la batterie 14 et prendre les différentes mesures de courant et de tension pour diriger le courant induit vers les LEDs ou vers la batterie, suivant les actions de l'utilisateur sur l'organe de commande 29 (accéléromètre ou capteur de pression en particulier).

## Revendications

1. Système d'alimentation par induction qui comporte un appareil (40) et un dispositif (50) d'alimentation par induction de l'appareil (40), dans lequel l'appareil (40) comporte une inductance (14), une capacité (15) raccordée à l'inductance (14) et permettant d'accorder l'inductance sur la fréquence d'alimentation par induction, un redresseur (16) couplé à l'inductance, une charge (13) couplée au redresseur, et un organe (29) de commande de l'alimentation de la charge (13), **caractérisé en ce qu'**il comporte:
- un convertisseur (19 à 22) de tension continue couplé au redresseur (16),
- une batterie (12) couplée au convertisseur de tension,
- des moyens (26) de mesure de la tension de sortie du redresseur (16),
la charge (13) étant couplée au convertisseur de tension, et l'appareil (40) comporte en outre une unité (10) de commande couplée au convertisseur de tension, reliée à l'organe (29) de commande et aux moyens (26) de mesure de tension, et agencée pour commander soit la charge la batterie par le redresseur, soit l'alimentation de la charge (13) par le redresseur, soit l'alimentation de la charge (13) par la batterie, en fonction de l'état de l'organe (29) de commande et de la tension de sortie du redresseur (16),
le convertisseur (19 à 22) de tension étant agencé et commandé pour charger la batterie (12) sous une tension inférieure à la tension de sortie du redresseur (16) et pour alimenter la charge (13) à partir de la batterie (12) sous une tension supérieure la tension de sortie de la batterie,
et **en ce que** le dispositif (50) d'alimentation par induction comporte :
- un second convertisseur (54, 55, 57) de tension convertissant une tension continue en une tension alternative
- une seconde inductance (51) couplée au second convertisseur de tension,
- un circuit (59) de mesure de tension aux bornes de la seconde inductance (51), et
- une seconde unité (60) de commande couplée au second convertisseur de tension, reliée au circuit (59) de mesure, et agencée pour commander soit l'alimentation de la seconde inductance (51) par le second convertisseur sous une tension contrôlée, en fonction de données de tension enregistrées dans une mémoire associée à la seconde unité (60) de commande, soit la délivrance à la seconde inductance (51) d'impulsions espacées dans le temps, par le second convertisseur; en fonction de mesures de tension délivrées par le circuit (59) de mesure.

2. Système d'alimentation par induction selon la revendication 1 dans lequel le convertisseur de tension comporte un circuit en demi-pont comportant deux commutateurs (19, 20) dont l'ouverture et la fermeture sont commandées par un circuit (11) de pilotage des commutateurs, en fonction de signaux de commande délivrés au circuit (11) de pilotage par l'unité (10) de commande.

3. Système d'alimentation par induction selon la revendication 1 ou 2 dans lequel l'organe de commande (29) servant d'interrupteur comporte un capteur sensible au contact d'un objet avec l'appareil, en particulier un capteur sensible au contact ou à l'appui d'un doigt d'un utilisateur sur l'appareil, par exemple un capteur de pression.

4. Système d'alimentation par induction selon l'une quelconque des revendications 1 à 3 qui comporte un circuit (18) d'amorçage couplé au redresseur et à l'unité de commande programmable et présentant une capacité suffisante pour alimenter temporairement l'unité de commande en l'absence de délivrance d'une tension continue par le redresseur et par la batterie.

5. Système d'alimentation par induction selon l'une quelconque des revendications 1 à 4 qui comporte des moyens (10, 32) de mesure de la tension de charge de la batterie.

6. Système d'alimentation par induction selon l'une quelconque des revendications 1 à 5 qui comporte des moyens (10, 25, 28) de mesure de l'intensité d'alimentation de la charge (13).

7. Système d'alimentation par induction selon l'une quelconque des revendications 1 à 6 qui comporte un circuit (17) de protection contre les surtensions qui est raccordé/couplé à la sortie du redresseur.

8. Système d'alimentation par induction selon l'une quelconque des revendications 1 à 7 dans lequel le convertisseur de tension comporte une branche raccordée à la sortie du redresseur, comportant deux transistors (19, 20) en série, et dont le point milieu est relié à la batterie par une inductance (21) et une capacité (22).

9. Système d'alimentation par induction selon l'une quelconque des revendications 1 à 8 dans lequel la charge (13) est reliée au redresseur et au convertisseur de tension par l'intermédiaire d'un interrupteur (24) commandé par l'unité (10) de commande.

10. Système d'alimentation par induction selon l'une quelconque des revendications 1 à 9 dans lequel la charge (13) comporte - ou est essentiellement constituée par - des LEDs raccordées en série.

11. Système d'alimentation par induction selon l'une quelconque des revendications 1 à 9 dans lequel la charge (13) comporte un moteur à courant continu, une tablette ou un ordinateur, un capteur, ou un instrument de mesure.

## Patentansprüche

1. System zur Stromversorgung durch Induktion, das ein Gerät (40) und eine Vorrichtung (50) zur induktiven Stromversorgung des Geräts (40) umfasst, wobei das Gerät (40) eine Induktivität (14), eine Kapazität (15), die an die Induktivität (14) angeschlossen ist und ermöglicht, die Induktivität auf die Frequenz der Stromversorgung durch Induktion abzustimmen, einen Gleichrichter (16), der mit der Induktivität gekoppelt ist, eine Last (13), die mit dem Gleichrichter gekoppelt ist, und ein Organ (29) zur Steuerung der Versorgung der Last (13) umfasst, **dadurch gekennzeichnet, dass** es umfasst:
- einen Gleichspannungswandler (19 bis 22), der mit dem Gleichrichter (16) gekoppelt ist,
- eine Batterie (12), die mit dem Spannungswandler gekoppelt ist,
- Mittel (26) zum Messen der Ausgangsspannung des Gleichrichters (16),
wobei die Last (13) mit dem Spannungswandler gekoppelt ist und das Gerät (40) ferner eine Steuereinheit (10) umfasst, die mit dem Spannungswandler gekoppelt, mit dem Steuerorgan (29) und den Mitteln (26) zur Spannungsmessung verbunden und dafür eingerichtet ist, in Abhängigkeit vom Zustand des Steuerorgans (29) und von der Ausgangsspannung des Gleichrichters (16) entweder das Laden der Batterie durch den Gleichrichter oder die Versorgung der Last (13) durch den Gleichrichter oder die Versorgung der Last (13) durch die Batterie zu steuern,
wobei der Spannungswandler (19 bis 22) so eingerichtet und gesteuert wird, dass er die Batterie (12) bei einer Spannung lädt, die niedriger als die Ausgangsspannung des Gleichrichters (16) ist, und die Last (13) bei einer Spannung, die höher als die Ausgangsspannung der Batterie ist, aus der Batterie (12) versorgt, und dadurch, dass die Vorrichtung (50) zur induktiven Versorgung Folgendes umfasst:
- einen zweiten Spannungswandler (54, 55, 57), der eine Gleichspannung in eine Wechselspannung umwandelt
- eine zweite Induktivität (51), die mit dem zweiten Spannungswandler gekoppelt ist,
- eine Schaltung (59) zum Messen der Spannung an den Anschlüssen der zweiten Induktivität (51) und
- eine zweite Steuereinheit (60), die mit dem zweiten Spannungswandler gekoppelt, mit der Messschaltung (59) verbunden und so eingerichtet ist, dass sie die Versorgung der zweiten Induktivität (51) durch den zweiten Wandler entweder bei einer geregelten Spannung in Abhängigkeit von Spannungsdaten, die in einem der zweiten Steuereinheit (60) zugeordneten Speicher gespeichert sind, oder aber durch die Abgabe von zeitlich beabstandeten Impulsen von dem zweiten Wandler an die zweite Induktivität (51) steuert;
und zwar in Abhängigkeit von Spannungsmessungen, die von der Messschaltung (59) geliefert werden.

2. System zur Stromversorgung durch Induktion nach Anspruch 1, wobei der Spannungswandler eine Halbbrückenschaltung mit zwei Schaltern (19, 20) umfasst, deren Öffnen und Schließen durch eine Schalteransteuerschaltung (11) in Abhängigkeit von Steuersignalen gesteuert wird, die der Ansteuerschaltung (11) von der Steuereinheit (10) geliefert werden.

3. System zur Stromversorgung durch Induktion nach Anspruch 1 oder 2, wobei das als Schalter dienende Steuerorgan (29) einen Sensor umfasst, der auf Kontakt eines Objekts mit dem Gerät reagiert, insbesondere einen Sensor, der auf eine Berührung oder ein Auflegen eines Fingers eines Benutzers auf das Gerät reagiert, beispielsweise einen Drucksensor.

4. System zur Stromversorgung durch Induktion nach einem der Ansprüche 1 bis 3, das eine Startschaltung (18) umfasst, die mit dem Gleichrichter und mit der programmierbaren Steuereinheit gekoppelt ist und eine Kapazität aufweist, die ausreicht, um bei fehlender Gleichspannungsversorgung durch den Gleichrichter und die Batterie die Steuereinheit vorübergehend mit Strom zu versorgen.

5. System zur Stromversorgung durch Induktion nach einem der Ansprüche 1 bis 4, das Mittel (10, 32) zum Messen der Ladespannung der Batterie umfasst.

6. System zur Stromversorgung durch Induktion nach einem der Ansprüche 1 bis 5, das Mittel (10, 25, 28) zum Messen des Versorgungsstroms der Last (13) umfasst.

7. System zur Stromversorgung durch Induktion nach einem der Ansprüche 1 bis 6, das eine Überspannungsschutzschaltung (17) umfasst, die an den Ausgang des Gleichrichters angeschlossen/gekoppelt ist.

8. System zur Stromversorgung durch Induktion nach einem der Ansprüche 1 bis 7, wobei der Spannungswandler einen an den Ausgang des Gleichrichters angeschlossenen Zweig umfasst, der zwei Transistoren (19, 20) in Reihe umfasst, deren Mittenanzapfung über eine Induktivität (21) und eine Kapazität (22) mit der Batterie verbunden ist.

9. System zur Stromversorgung durch Induktion nach einem der Ansprüche 1 bis 8, wobei die Last (13) über einen von der Steuereinheit (10) gesteuerten Schalter (24) mit dem Gleichrichter und dem Spannungswandler verbunden ist.

10. System zur Stromversorgung durch Induktion nach einem der Ansprüche 1 bis 9, wobei die Last (13) in Reihe geschaltete LEDs umfasst oder im Wesentlichen von diesen gebildet wird.

11. System zur Stromversorgung durch Induktion nach einem der Ansprüche 1 bis 9, wobei die Last (13) einen Gleichstrommotor, ein Tablet oder einen Computer, einen Sensor oder ein Messinstrument umfasst.

## Claims

1. Inductive power system which comprises an apparatus (40) and a device (50) for inductively powering the apparatus (40), wherein the apparatus (40) comprises an inductor (14), a capacitor (15) which is connected to the inductor (14) and allows the inductor to be tuned to the inductive power frequency, a rectifier (16) coupled to the inductor, a load (13) coupled to the rectifier, and an element (29) for controlling the supply of power to the load (13), **characterized in that** it comprises:
- a DC voltage converter (19 to 22) coupled to the rectifier (16),
- a battery (12) coupled to the voltage converter,
- means (26) for measuring the output voltage of the rectifier (16),
the load (13) being coupled to the voltage converter, and the apparatus (40) further comprises a control unit (10) which is coupled to the voltage converter and connected to the control element (29) and the voltage measurement means (26) and is arranged so as to control either the charging of the battery by the rectifier or the supply of power to the load (13) by the rectifier or the supply of power to the load (13) by the battery, depending on the state of the control element (29) and the output voltage of the rectifier (16),
the voltage converter (19 to 22) being arranged and controlled so as to charge the battery (12) at a voltage lower than the output voltage of the rectifier (16) and to supply power to the load (13) from the battery (12) at a voltage greater than the output voltage of the battery, and **in that** the inductive power device (50) comprises:
- a second voltage converter (54, 55, 57) converting a DC voltage into an AC voltage
- a second inductor (51) coupled to the second voltage converter,
- a circuit (59) for measuring voltage across the second inductor (51), and
- a second control unit (60) which is coupled to the second voltage converter and connected to the measuring circuit (59) and is arranged so as to control either the supply of power to the second inductor (51) by the second converter at a controlled voltage, on the basis of voltage data stored in a memory associated with the second control unit (60), or the supply of pulses that are spaced apart in time to the second inductor (51) by the second converter;
on the basis of voltage measurements supplied by the measuring circuit (59).

2. Inductive power system according to claim 1, wherein the voltage converter comprises a half-bridge circuit comprising two switches (19, 20), the opening and closing of which are controlled by a circuit (11) for controlling the switches, on the basis of control signals supplied to the control circuit (11) by the control unit (10).

3. Inductive power system according to either claim 1 or claim 2, wherein the control element (29) used as a switch comprises a sensor that is sensitive to the contact of an object with the apparatus, in particular a sensor sensitive to the contact or the pressing of a user's finger on the apparatus, for example a pressure sensor.

4. Inductive power system according to any of claims 1 to 3, comprising a starting circuit (18) which is coupled to the rectifier and to the programmable control unit and has sufficient capacity for temporarily powering the control unit in the absence of a supply of DC voltage by the rectifier and by the battery.

5. Inductive power system according to any of claims 1 to 4, comprising means (10, 32) for measuring the charging voltage of the battery.

6. Inductive power system according to any of claims 1 to 5, comprising means (10, 25, 28) for measuring the magnitude of the supply of power to the load (13).

7. Inductive power system according to any of claims 1 to 6, comprising an overvoltage protection circuit (17) which is connected/coupled to the output of the rectifier.

8. Inductive power system according to any of claims 1 to 7, wherein the voltage converter comprises a branch connected to the output of the rectifier, comprising two transistors (19, 20) in series, and the midpoint of which is connected to the battery by an inductor (21) and a capacitor (22).

9. Inductive power system according to any of claims 1 to 8, wherein the load (13) is connected to the rectifier and to the voltage converter by means of a switch (24) controlled by the control unit (10).

10. Inductive power system according to any of claims 1 to 9, wherein the load (13) comprises - or substantially consists of - LEDs connected in series.

11. Inductive power system according to any of claims 1 to 9, wherein the load (13) comprises a DC motor, a tablet or a computer, a sensor, or a measuring instrument.
